(19) Europäisches Patentamt
European Patent Office
Office européen des brevets

(11) **EP 3 640 465 A1**

(12) **EUROPEAN PATENT APPLICATION**

(43) Date of publication:
**22.04.2020  Bulletin 2020/17**

(51) Int Cl.:
*F02K 1/00* (2006.01)    *F02K 3/06* (2006.01)

(21) Application number: **19198342.8**

(22) Date of filing: **19.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2018  GB 201817058**

(71) Applicant: **Rolls-Royce plc
London N1 9FX (GB)**

(72) Inventor: **Phelps, Benedict
Derby, Derbyshire DE24 8BJ (GB)**

(74) Representative: **Rolls-Royce plc
Intellectual Property Dept SinA-48
PO Box 31
Derby DE24 8BJ (GB)**

(54) **COLD NOZZLE OPTIMISATION**

(57)   The present disclosure relates to optimisation of a cold nozzle, or bypass exit area, for a gas turbine engine, in particular for a geared turbofan gas turbine engine. Example embodiments include a method (70) of optimising a geared turbofan gas turbine engine (10) for an aircraft, the method comprising: determining (71) expected service parameters for the aircraft, the expected service parameters including an expected range of travel for the aircraft; selecting components for the geared turbofan gas turbine engine to define (73) a first smaller cold nozzle area if the range of travel is within a first smaller range and to define (74) a second larger cold nozzle area if the range of travel is within a second larger range.

Fig.7

**Description**

The present disclosure relates to optimisation of a cold nozzle, or bypass exit area, for a gas turbine engine, in particular for a geared turbofan gas turbine engine.

In conventional non-geared turbofan gas turbine engines, the fan rotates at the same rotational speed as that of the turbine driving the fan, since the fan and turbine are connected via a central shaft. This tends to limit the upper diameter of the fan in order to prevent excessive rotational speeds at the blade tip. Incorporating gearing in the connection between the turbine and the fan to reduce the rotational speed of the fan while maintaining a high rotational speed for the turbine allows for a larger design of fan and the overall engine to be made more efficient. This may have other benefits such as being able to reduce the size of the engine core.

According to a first aspect there is provided a method of optimising a geared turbofan gas turbine engine for an aircraft, the method comprising:

determining expected service parameters for the aircraft, the expected service parameters including an expected range of travel for the aircraft;
selecting components for the geared turbofan gas turbine engine to define a first smaller cold nozzle if the range of travel is within a first smaller range and to define a second larger cold nozzle if the range of travel is within a second larger range.

The cold nozzle, or bypass exit area, can be selected for the gas turbine engine according to the expected range of travel the aircraft is to have, i.e. whether the aircraft is to be used primarily for short haul or long haul flights. An advantage of this is that a smaller cold nozzle can be selected when the aircraft has a lower range of travel to improve the overall efficiency of the engine. This is because a smaller cold nozzle will, in the absence of other alterations, result in an increase in specific thrust for the engine, which will tend to improve climb performance at the cost of a small reduction in cruise efficiency. This will benefit shorter range travel. For longer range travel, where cruise efficiency is a larger factor, a larger cold nozzle may be selected. Therefore, when manufacturing large numbers of gas turbine engines, engines having nominally the same construction can be built and assembled before a selection is made regarding the service conditions to be expected. Only those components that define the cold nozzle, such as the nacelle, or a portion thereof, need to be selected from a limited number of optional alternatives (which may for example be two alternatives) to determine the required cold nozzle, or bypass exit, area. This reduces manufacturing costs because only one production line is required for most of the engine assembly stages.

The geared turbofan gas turbine engine may comprise an engine core and an outer housing that defines a bypass duct and the cold nozzle. The components to be selected may include a nacelle, or a portion thereof, or alternatively may be an outer casing of the engine core, or a portion thereof. The step of selecting components may include selecting a nacelle or engine outer casing, or a portion thereof, from a limited number of alternatives. Two alternatives may, for example be available to select from, with one alternative defining a first smaller cold nozzle and the other defining a second larger cold nozzle.

A specific thrust of the geared turbofan gas turbine engine with the first smaller cold nozzle may be at least 1% greater than a specific thrust of the geared turbofan gas turbine engine with the second larger cold nozzle. A greater specific thrust improves the climb performance of the engine, which has a disproportionate benefit for shorter range travel. The specific thrust may be between 1 and 3% greater for the smaller cold nozzle than for the larger cold nozzle. The specific thrust in each case may be within the range of 80 to 110 Nkg$^{-1}$s.

A fan area of the geared turbofan gas turbine engine, i.e. a total area swept by the front face of the fan, may be between around 4.1 and 11.2 square metres.

The geared turbofan gas turbine engine may be configured to have a fan tip air angle θ of between 57 and 62 degrees at cruise, the fan tip air angle θ being defined as:

$$\theta = \tan^{-1}\left(\frac{V_{ThetaBladeTip}}{Vx_{air}}\right)$$

where $V_{ThetaBladeTip} = |\omega.\frac{D}{2}|$; $\omega$ is the fan rotational speed in radians/second, D is the outer tip diameter of the fan in metres at its leading edge and $Vx_{air}$ is the mean axial velocity of the flow into the fan over the leading edge of the fan blades.

In some examples the fan tip air angle θ at engine cruise conditions may be in the range of from 57 degrees to 62 degrees, 58 degrees to 61 degrees or 59 degrees to 60 degrees.

The method may further comprise assembling the geared turbofan gas turbine engine, and may further comprise mounting one or more geared turbofan gas turbine engines having the same sized cold nozzle on to an aircraft.

The first smaller range of travel may be between 556 and 1296 km (300 and 700 nautical miles), while the second larger range of travel may be greater than 1296 km (700 nautical miles). In some examples the first smaller range of travel may be 926 km (500 nm) or less. In some examples the second larger range may be 1852 km (1000 nm) or more.

In accordance with a second aspect there is provided a plurality of gas turbine engines for a plurality of aircraft, each gas turbine engine comprising:

an engine core comprising a turbine, a compressor, and a core shaft connecting the turbine to the compressor;
a fan located upstream of the engine core, the fan comprising a plurality of fan blades;
a gearbox that receives an input from the core shaft and outputs drive to the fan so as to drive the fan at a lower rotational speed than the core shaft; and
an outer housing defining a bypass duct between the outer housing and the engine core and further defining a cold nozzle,
wherein each of a first subset of the plurality of gas turbine engines comprises components defining a first smaller cold nozzle area and each of a second subset of the plurality of gas turbine engines comprises components defining a second larger cold nozzle area.

The components defining the first and second cold nozzle areas may be the outer housing, or portion thereof, or an outer casing, or portion thereof, of the engine core.

The first plurality of gas turbine engines may be for aircraft having a first smaller range of travel while the second plurality of gas turbine engines are for aircraft having a second larger range of travel. The first smaller range of travel may be between 556 and 1296 km (300 and 700 nautical miles) while the second larger range of travel is greater than 1296 km (700 nautical miles).

Each gas turbine engine may have a nominally identical engine core, fan and gearbox.

For each gas turbine engine, the turbine may be a first turbine, the compressor a first compressor, and the core shaft a first core shaft, the engine core further comprising a second turbine, a second compressor, and a second core shaft connecting the second turbine to the second compressor. The second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than for on the order of) any of the following: 110 $Nkg^{-1}s$, 105 $Nkg^{-1}s$, 100 $Nkg^{-1}s$, 95 $Nkg^{-1}s$, 90 $Nkg^{-1}s$, 85 $Nkg^{-1}s$ or 80 $Nkg^{-1}s$.

The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engines may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a schematic plot of fan bypass efficiency as a function of bypass flow rate for two types of gas turbine engine;

Figure 5 is a sectional side view of a gas turbine engine, in which alternative bypass exits, or cold nozzles, are illustrated; and

Figure 6 is a schematic flow chart illustrating a method of optimising a geared turbofan gas turbine engine.

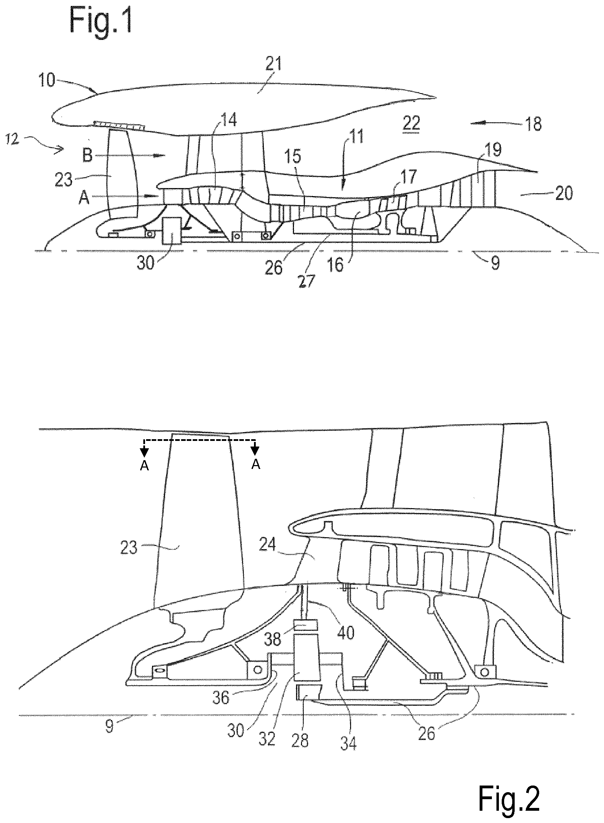

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle, or cold nozzle, 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

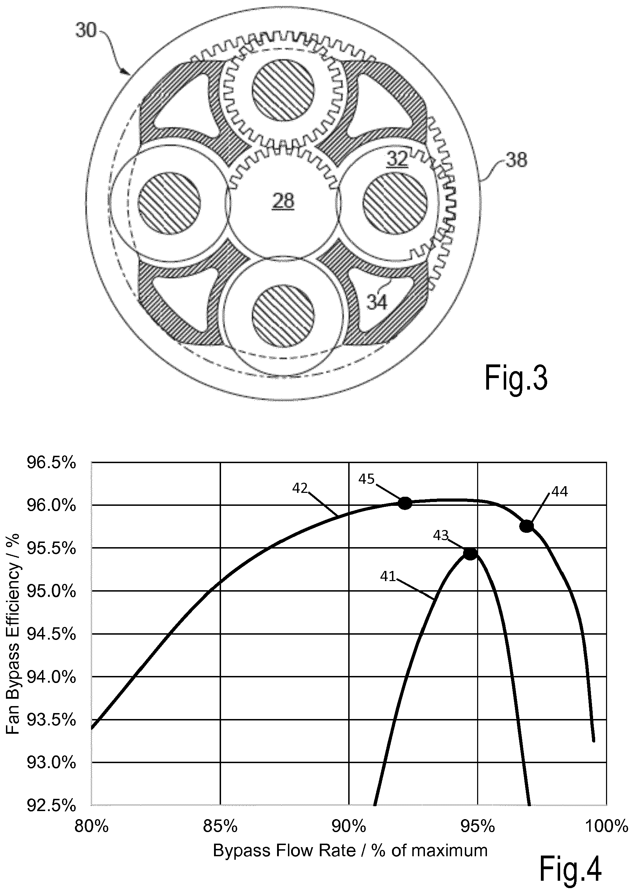

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 illustrates two plots of fan bypass efficiency as a function of fan inlet bypass flow rate at a constant fan speed, in which bypass flow rate is expressed as a percentage of maximum flow rate. A typical relation between these parameters for a conventional non-geared gas turbine engine is shown in a first curve 41, while a typical relation for a geared gas turbine engine is shown in a second curve 42. In each case, the position on the curve can be changed by changing the cold nozzle area. The two curves show quite different relationships, with the first curve 41 showing a sharper drop off in efficiency either side of an operating point 43. For the second curve 42, the drop off in efficiency is shallower, allowing for a greater degree of flexibility in designing the cold nozzle area. This realisation enables more than one design of cold nozzle area to be selected while retaining acceptable overall efficiency. Two possible operating points 44 and 45 are shown on the second curve, representing possible alternative operating points for the geared turbofan gas turbine engine.

As an example, for a geared turbofan gas turbine engine, altering the cold nozzle area to increase the specific thrust by 2% can result in the changes to efficiency and fuel burn, as shown in Table 1 below.

Table 1 - Changes in efficiency and fuel burn for an example geared turbofan gas turbine engine for a 2% change in specific thrust.

|  | Fan efficiency % | Propulsive efficiency % | % improvement in Fuel burn for 1000nm mission (estimated) | % improvement in Fuel burn for 500nm mission (estimated) |
|---|---|---|---|---|
| Cruise | +0.3 | -0.3 | -0.1% | -0.1% |
| Top of Climb | +1.8 | -0.3 | +0.25% | 1.1% |

(continued)

|  | Fan efficiency % | Propulsive efficiency % | % improvement in Fuel burn for 1000nm mission (estimated) | % improvement in Fuel burn for 500nm mission (estimated) |
|---|---|---|---|---|
| Maximum Take-off | -0.4 | -0.4 | N/A | N/A |

For a long range mission, this higher specific thrust cycle is unlikely to be better for overall fuel burn, but on short range missions (with possibly significant derate), the climb efficiency improvement may be beneficial overall. As shown in the above table, for a 1000nm (1852 km) mission, the higher specific thrust variant is predicted to have a net 0.15% fuel burn improvement, but at 500nm (926 km) the benefit is predicted to be approximately 1%. A higher specific thrust can therefore be beneficial overall if the engine is to be used primarily for short range missions.

Another way at looking at this is that the baseline cycle has similar efficiency as the +2% specific thrust cycle, but at a reduced stability risk (the static working line for the +2% specific thrust cycle is -2.5% higher).

More generally, this trade of cruise efficiency vs climb efficiency vs take off efficiency through changing nozzle areas for different missions will likely change for different engine designs. The advantage, however, is that the same engine and fan design can be used for more than one design by varying only those components needed to change the cold nozzle area.

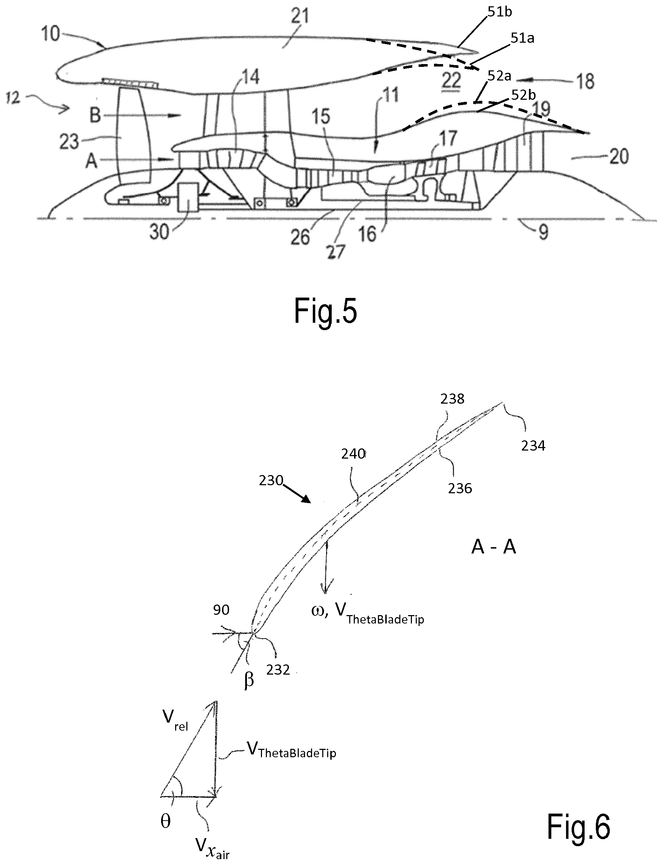

Figure 5 illustrates a modified version of the gas turbine engine 10 of Figure 1, in which alternative cold nozzles are illustrated. The other components of the gas turbine engine 10 are the same as those in Figure 1. A first option for changing the cold nozzle area is to change the dimensions of the outer nacelle 21, such that a rear portion 51a of the nacelle 21 in a first option defines a first smaller cold nozzle area and a rear portion 51b of the nacelle 21 in a second option defines a second larger cold nozzle area. An alternative way of defining the cold nozzle area is to alter the dimensions of the outer casing for the engine core 11, such that a rear portion 52a of the outer casing defines a first smaller cold nozzle area and a rear portion 52b of the outer casing defines a second larger cold nozzle area. In some cases adjustments to both the outer casing of the engine core 11 and the nacelle 21 may be made to change the cold nozzle area. An alternative way of achieving different sized cold nozzles would be to use a variable area nozzle (VAN), but this would add substantial weight and complexity to the engine, potentially outweighing any benefits of using different size cold nozzles to achieve different overall engine performance. The engine therefore preferably does not incorporate a VAN.

The fan 23 comprises individual fan blades 230. A cross-section A-A (indicated in Figure 2) through a tip of one of the fan blades 230 is shown in Figure 6. The cross-section may be at 90% of the blade span from the root (i.e. from the radially innermost gas-washed part of the fan blade 230).

The fan blade 230 has a leading edge 232, a trailing edge 234, a pressure surface 236 and a suction surface 238. The cross-section A-A also has a camber line 240. The camber line 240 is defined as the line formed by the points in the cross-section that are equidistant from the pressure surface 236 and the suction surface 238 for that cross-section. The cross-section A-A may be generated using a plane.

A line 90 is a projection into the cross-section A-A of a line that is parallel to the rotational axis 9 of the engine 10 (see Figure 5). The line 90 passes through the leading edge 232 of the cross-section A-A. The angle between this line 90 and the tangent to the camber line 240 is shown in Figure 6 as the blade tip angle β. This angle β may for example be within the range of 57 to 65 degrees. In the example shown in Figure 6, the tangent to the camber line 240 that is used to define the angle β is taken at the very leading edge 232 of the fan blade 230. However, in other arrangements, the tangent to the leading edge of the camber line 240 may be taken at any point within 5% of the total length of the camber line 240 from the leading edge 232. This means that blades having unusual leading edge curvature affecting the forwardmost 5% portion of the blade may still be within the defined range of blade tip angle β, even if the tangent taken at the very leading edge 232 would not result in an angle β falling within such a range. Purely by way of example, the blade tip angle β of the fan blade 230 shown in Figure 6 is around 60 degrees.

As noted elsewhere herein, in use the fan 23, and thus the fan blades 230, rotate about the rotational axis 9. At cruise conditions (as defined elsewhere herein), the fan rotates at a rotational speed ω, resulting in a linear velocity $V_{ThetaBladeTip}$ at the leading edge 232 of the blade tip 231 given by:

$$V_{ThetaBladeTip} = |\omega . \frac{D}{2}|$$

At least in part due to the rotation of the fan 230, air is ingested into the fan, resulting in a flow over the leading edge 232. The mean axial velocity of the flow at the leading edge 232 of the fan blade is shown as $Vx_{air}$ in Figure 6. The vector sum of $Vx_{air}$ and ($-V_{ThetaBladeTip}$) gives the relative velocity $V_{rel}$ of the air at the leading edge 232 of the blade tip 231.

A fan tip air angle $\theta$ is shown in Figure 6 and defined as:

$$\theta = \tan^{-1}(\frac{V_{ThetaBladeTip}}{Vx_{air}})$$

This fan tip air angle $\theta$ may be thought of as the angle between the vector representing $Vx_{air}$ (which is in an axial direction) and the vector representing the relative velocity $V_{rel}$ of the air at the leading edge 232 of the blade tip.

Gas turbine engines in accordance with some aspects of the present disclosure may have a fan tip air angle $\theta$ in the ranges described and/or claimed herein, for example in the range of from 57 degrees to 62 degrees. Purely by way of example, the fan tip air angle $\theta$ of the fan blade 230 shown in Figure 6 is on the order of 60 degrees at cruise conditions of the gas turbine engine 10.

Gas turbine engines having fan tip air angles $\theta$ and/or blade tip angles $\beta$ in the ranges outlined herein may provide various advantages, such as improving the bird strike capability whilst retaining the efficiency advantages associated with geared and/or low specific thrust gas turbine engines, and may allow greater design freedom in other aspects of the fan system (including fan blades), such as weight, aerodynamic design, complexity and/or cost. Optimising the fan tip air angle may therefore further optimise the ability to design an engine for which more than one cold nozzle area may be selected depending on the expected range of travel.

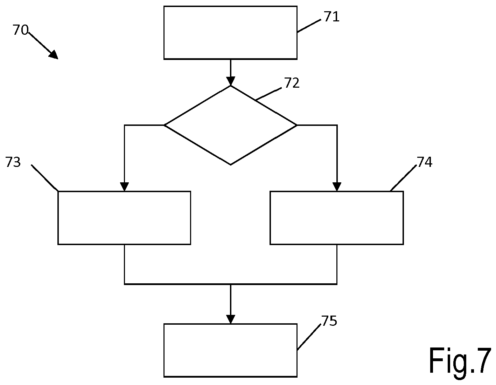

Figure 7 is a schematic flow diagram for a method 70 of optimising a geared turbofan gas turbine engine for an aircraft. In a first step 71, the expected service parameters for the aircraft on which the engine is to be used are determined. In a second step 72, a decision is made depending on whether the service parameters indicate a short range of travel or a long range of travel. If the range of travel is within a first smaller range, components are selected (step 73) to define a first smaller cold nozzle. If the range of travel is within a second larger range, components are selected (step 74) to define a second larger cold nozzle. The components selected may include a nacelle, or a portion thereof, an outer casing for the engine core, or a portion thereof, or a combination of the two. In a final step 75, the geared turbofan gas turbine engine is assembled, and may then be installed on an aircraft.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method (70) of optimising a geared turbofan gas turbine engine (10) for an aircraft, the method comprising:

   determining (71) expected service parameters for the aircraft, the expected service parameters including an expected range of travel for the aircraft;
   selecting components for the geared turbofan gas turbine engine to define (73) a first smaller cold nozzle area if the range of travel is within a first smaller range and to define (74) a second larger cold nozzle area if the range of travel is within a second larger range.

2. The method of claim 1 wherein the geared turbofan gas turbine engine (10) comprises an engine core (11) and a nacelle (21) defining a bypass duct (22) and the cold nozzle area (18).

3. The method of claim 2 wherein the components of the geared turbofan gas turbine engine (10) include:

   the nacelle (21), or a portion thereof; and/or
   an outer casing of the engine core (11), or a portion thereof.

4. The method of claim 3 wherein the step of selecting components for the geared turbofan gas turbine engine (10) from two alternative selections defining respective first and second cold nozzle areas.

5. The method of any preceding claim wherein a specific thrust of the geared turbofan gas turbine engine (10) with the first smaller cold nozzle area is at least 1% greater than a specific thrust of the geared turbofan gas turbine (10) with the second larger cold nozzle area.

6. The method of claim 5 wherein the specific thrust of the geared turbofan gas turbine engine (10) with the first smaller cold nozzle is between 1% and 3% greater than the specific thrust of the geared turbofan gas turbine (10) with the second larger cold nozzle.

7. The method of claim 5 or claim 6 wherein the specific thrust of the geared turbofan gas turbine engine (10) is within the range of 80 to 110 Nkg$^{-1}$s.

8. The method of any preceding claim wherein:

   a fan inlet area of the geared turbofan gas turbine engine (10) is between 4.1 and 11.2 m$^2$ ;and/or
   the method further comprises assembling (65) the geared turbofan gas turbine engine (10); and/or
   the first smaller range of travel is between 556 and 1296 km (300 and 700 nautical miles) and the second larger range of travel is greater than 1296 km (700 nautical miles).

9. The method of any preceding claim wherein the geared turbofan gas turbine engine (10) is configured to have an fan tip air angle of between 57 and 62 degrees at cruise, the fan tip air angle $\theta$ being defined as:

$$\theta \;=\; \tan^{-1}(\frac{V_{ThetaBladeTip}}{Vx_{air}})$$

where $V_{ThetaBladeTip} = |\omega.\frac{D}{2}|$; $\omega$ is the fan rotational speed in radians/second, D is the outer tip diameter of the fan in metres at its leading edge and $Vx_{air}$ is the mean axial velocity of the flow into the fan over the leading edge of the fan blades.

10. A plurality of gas turbine engines (10) for a plurality of aircraft, each gas turbine engine (10) comprising:

    an engine core (11) comprising a turbine (19), a compressor (14), and a core shaft (26) connecting the turbine to the compressor;
    a fan (23) located upstream of the engine core, the fan comprising a plurality of fan blades;
    a gearbox (30) that receives an input from the core shaft (26) and outputs drive to the fan so as to drive the fan at a lower rotational speed than the core shaft; and
    an outer housing (21) defining a bypass duct (22) between the outer housing (21) and the engine core (11) and further defining a cold nozzle,
    wherein each of a first subset of the plurality of gas turbine engines (10) comprises components defining a first smaller cold nozzle area and each of a second subset of the plurality of gas turbine engines (10) comprises components defining a second larger cold nozzle.

11. The plurality of gas turbine engines of claim 10 wherein the components defining the first and second cold nozzle areas are the outer housing (21), or portion thereof, and/or an outer casing, or portion thereof, of the engine core (11).

12. The plurality of gas turbine engines of claim 10 or claim 11 wherein the first plurality of gas turbine engines are for aircraft having a first smaller range of travel and the second plurality of gas turbine engines are for aircraft having a second larger range of travel.

13. The plurality of gas turbine engines of claim 12 wherein the first smaller range of travel is between 556 and 1296 km (300 and 700 nautical miles) and the second larger range of travel is greater than 1296 km (700 nautical miles).

14. The plurality of gas turbine engines of any one of claims 10 to 13 wherein each gas turbine engine (10) has a nominally identical engine core (11), fan (23) and gearbox (30).

15. The plurality of gas turbine engines according to any one of claims 10 to 13, wherein for each gas turbine engine:

    the turbine is a first turbine (19), the compressor is a first compressor (14), and the core shaft is a first core shaft (26);
    the engine core further comprises a second turbine (17), a second compressor (15), and a second core shaft (27) connecting the second turbine to the second compressor; and

the second turbine, second compressor, and second core shaft are arranged to rotate at a higher rotational speed than the first core shaft.

Fig.1

Fig.2

Fig.3

Fig.4

Fig.5

A - A

Fig.6

Fig.7

Europäisches
Patentamt

European
Patent Office

Office européen
des brevets

# EUROPEAN SEARCH REPORT

Application Number

EP 19 19 8342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/027131 A1 (UNITED TECHNOLOGIES CORP [US]) 26 February 2015 (2015-02-26) * paragraph [0003] * * figures 1,5 * * paragraph [0045] * ----- | 1-15 | INV. F02K1/00 F02K3/06 |
| A | US 2010/242433 A1 (PRAT DAMIEN [FR] ET AL) 30 September 2010 (2010-09-30) * figure 1 * * paragraph [0048] * ----- | 1-15 | |
| A | US 2011/030380 A1 (WIDDLE JR RICHARD D [US] ET AL) 10 February 2011 (2011-02-10) * paragraph [0005] - paragraph [0006] * * figure 1 * ----- | 1-15 | |
|  |  |  | TECHNICAL FIELDS SEARCHED (IPC) |
|  |  |  | F02K |

The present search report has been drawn up for all claims

| Place of search | Date of completion of the search | Examiner |
|---|---|---|
| The Hague | 4 March 2020 | Burattini, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 19 19 8342

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2020

| Patent document cited in search report | | Publication date | Patent family member(s) | | Publication date |
|---|---|---|---|---|---|
| WO 2015027131 | A1 | 26-02-2015 | EP | 3036422 A1 | 29-06-2016 |
| | | | US | 2016194968 A1 | 07-07-2016 |
| | | | WO | 2015027131 A1 | 26-02-2015 |
| US 2010242433 | A1 | 30-09-2010 | BR | PI0817360 A2 | 31-03-2015 |
| | | | CA | 2702684 A1 | 30-07-2009 |
| | | | CN | 101970844 A | 09-02-2011 |
| | | | EP | 2212538 A2 | 04-08-2010 |
| | | | FR | 2923270 A1 | 08-05-2009 |
| | | | JP | 5070345 B2 | 14-11-2012 |
| | | | JP | 2011503409 A | 27-01-2011 |
| | | | RU | 2010122964 A | 20-12-2011 |
| | | | US | 2010242433 A1 | 30-09-2010 |
| | | | WO | 2009092893 A2 | 30-07-2009 |
| US 2011030380 | A1 | 10-02-2011 | CA | 2767049 A1 | 10-02-2011 |
| | | | CN | 102472201 A | 23-05-2012 |
| | | | EP | 2462330 A2 | 13-06-2012 |
| | | | US | 2011030380 A1 | 10-02-2011 |
| | | | US | 2018094622 A1 | 05-04-2018 |
| | | | WO | 2011016973 A2 | 10-02-2011 |

EPO FORM P0459

For more details about this annex : see Official Journal of the European Patent Office, No. 12/82